# EUROPEAN PATENT SPECIFICATION

(11) **EP 1 279 565 B1**
(45) Date of publication and mention of the grant of the patent: **08.06.2005**
(21) Application number: 02015635.2
(22) Date of filing: 16.07.2002
(51) Int. Cl.: B60R 21/16

(54) **Airbag device with a knee bag**
Luftsackvorrichtung mit einem Knieluftsack
Dispositif à coussins gonflables comportant un coussin pour les genoux

(30) Priority: 23.07.2001 JP 2001221677
(43) Date of publication of application: 29.01.2003
(73) Proprietor: TAKATA CORPORATION, Minato-ku, Tokyo 106-8510 (JP)
(72) Inventor: Abe, Kazuhiro, Takata Corporation, Tokyo 106-8510 (JP)
(74) Representative: Banzer, Hans-Jörg, Dipl.-Ing.

(56) References cited:
- US-A- 3 768 830
- US-A- 4 043 572

## Description

### [Technical Field of the Invention]

The present invention relates to an occupant protection device for protecting an occupant at the time of a collision of a high-speed moving body such as a vehicle, and, more particularly, to an occupant protection device including an airbag and a knee bag.

### [Description of the Related Art]

In order to protect an occupant at the time of an emergency, such as a collision of a vehicle, a driver-seat airbag, a passenger-seat airbag, a leg-protecting knee bag, or the like is provided in the vehicle.

The driver-seat airbag is provided at a steering wheel, and a passenger-seat airbag is primarily provided at an interior panel, such as an instrument panel. The knee bag is provided at, for example, a glove box or an interior panel, disposed in front of the legs of an occupant.

The airbag and the knee bag are both covered in a folded state. At the time of an emergency, such as a collision of a vehicle, an inflator operates to supply gas into the airbag or the knee bag, causing the airbag or the knee bag to expand. The cover is removed as a result of being pushed by the expanding airbag or knee bag, so that the airbag or knee bag expands in front of an occupant.

US 3,768,830 discloses an occupant protection device according to the preamble of claim 1, wherein an airbag is inflated via a knee bag.

US 4,043,572, which corresponds to the preamble of claim 1, discloses a further occupant protection device with an airbag and a knee bag, wherein the airbag and the knee bag expand adjacent to each other toward an occupant.

### [Problems to be Solved by the Invention]

Accordingly, an object of the present invention is to provide an occupant protection device which can adequately protect an occupant by combining an airbag which expands in front of the upper half of the body of an occupant and a knee bag which expands in front of the legs of the occupant.

Another object of the present invention is to provide an occupant protection device which can adequately restrict forward movement of the lumbar part of an occupant by an airbag.

Still another object of the present invention is to provide an occupant protection device which can restrain an occupant earlier by expanding an airbag in front of the occupant even if the output of an inflator is small.

### [Means for Solving the Problems]

According to the present invention, these objects are achieved by an occupant protection device as defined in claim 1. The dependent claims define preferred and advantageous embodiments of the invention.

The occupant protection device of the present invention includes an airbag which expands in front of the upper half of the body of a seated occupant and a knee bag which expands in front of the occupant's legs, wherein a top end of the knee bag that has expanded is positioned at least 50 mm above a bottom end of the airbag that has expanded.

In such an occupant protection device, a top end portion of the expanded knee bag and a bottom end portion of the expanded airbag are placed upon each other in front of and in back of each other.

Therefore, it is possible to construct the airbag, for example, so that the bottom end portion thereof moves into an area between the top end portion of the expanded knee bag and the occupant, so that receding movement of the bottom end portion of the airbag is restricted even if it is pushed by the occupant.

As a result, it is possible to adequately restrict forward movement of the lumbar part of the occupant by the airbag. The space between the top end portion of the expanded knee bag and the occupant is smaller than a space that is provided when the knee bag is not provided. Therefore, by completing the expansion of the knee bag earlier than the expansion of the airbag, even if an output of an inflator for expanding the airbag is made small, it is possible to restrain the occupant by sufficiently expanding the airbag.

In the present invention, a vent hole may be provided in a surface of the knee bag that comes into contact with the expanded airbag. When such a structure is used, it is possible to maintain the pressure of gas inside the knee bag at a relatively high value for a long period of time by restricting flowing out of the gas in the knee bag from the vent hole after the vent hole of the knee bag has been covered by the airbag. Until the vent hole is covered by the airbag, the gas inside the knee bag flows out of the vent hole, so that shock exerted on the legs of the occupant is sufficiently absorbed.

### [Brief Description of the Drawings]

Fig. 1 is a vertical sectional view showing the vicinity of a passenger seat of an automobile including an occupant protection device of an embodiment.
Fig. 2 is a sectional view of a similar portion to that shown in Fig. 1 of another embodiment.
Fig. 3 is a vertical sectional view showing the vicinity of a driver's seat of an automobile including an occupant protection device for protecting an occupant by a driver-seat airbag and a knee bag.

### [Description of the Embodiments]

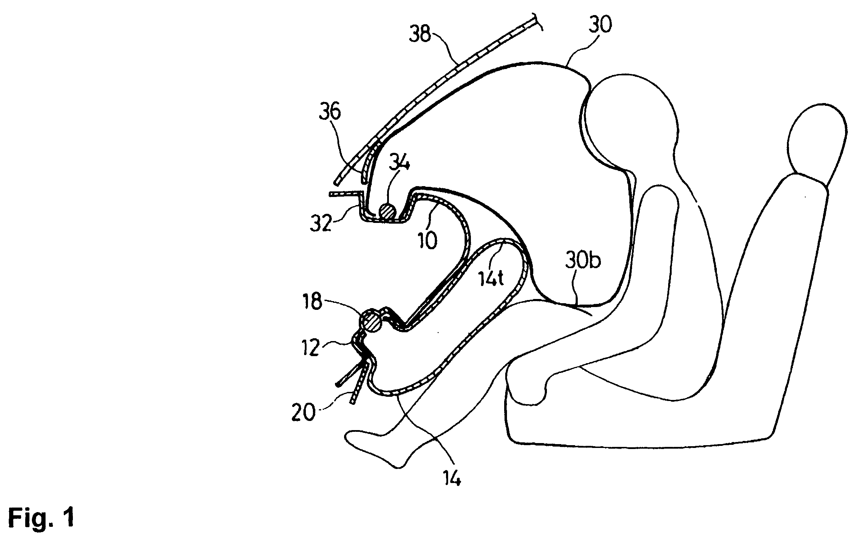

Hereunder, a description of embodiments of the present invention will be given with reference to the drawings. Fig. 1 is a vertical sectional view showing the vicinity of a passenger seat of an automobile including an occupant protection device of an embodiment of the present invention.

In the embodiment, an occupant is protected by a passenger-seat airbag and a knee bag.

A knee-bag case 12 is disposed inside an interior panel (an instrument panel, a lower panel, or the like in the embodiment) 10 in front of a seat in the automobile. A knee bag 14 is accommodated in a folded state inside the case 12, and is fastened to the case 12 by a fastening member. An inflator (gas generator) 18 for expanding the knee bag 14 is installed inside the case 12. The case 12 has an opening which opens along the interior panel 10, with the opening being covered by a lid 20.

When the automobile collides, the inflator 18 ejects gas to expand the knee bag 14. Then the lid 20 starts to open due to the pressure from the expanding knee bag 14. Then, the knee bag 14 is expanded along the front surface portion of the case 12 and the interior panel 10 in the vicinity thereof. The knee bag 14 receives the legs of the occupant and protects them.

The peripheral edge of an opening at the back end of a passenger-seat airbag 30 is connected to a container 32. The container 32 is disposed in the top surface portion of the interior panel (instrument panel) 10. An inflator 34 is installed inside the container 32, with gas ejected from the inflator 34 being introduced into the airbag 30. The airbag 30 is accommodated in a folded state inside the container 32. A lid 36 is mounted at an open portion of the container 32. When the airbag 30 expands, the lid 36 starts to open towards the inside of the automobile compartment by being pushed by the airbag 30.

At the time of an emergency, such as a collision of a vehicle, the passenger-seat airbag 30 expands in front of the upper half of the body of the occupant by the gas ejected from the inflator 34 that has been operated, and the expanded passenger-seat airbag 30 receives the upper half of the body of the occupant.

When the knee bag 14 and the airbag 30 are both in completely expanded states (here, it is assumed that there is no occupant), a top end portion 14t of the knee bag 14 is positioned at least 50 mm above a bottom end portion 30b of the airbag 30. The difference between the heights of the top end portion 14t and the bottom end portion 30b is desirably of the order of 50 to 150 mm, and more desirably of the order of 60 to 100 mm.

The knee bag 14 expands along the interior panel 10. On the other hand, the airbag 30 first starts to expand upward from the container 32, and, then, expands towards the occupant along a windshield 38. Therefore, the bottom end portion 30b of the passenger-seat airbag 30 expands so as to move into an area between the top end portion 14t of the expanded knee bag and the lumbar part of the occupant. In general, since the capacity of the knee bag 14 is considerably smaller than that of the passenger-seat airbag 30, the expansion of the knee bag 14 is completed earlier than the expansion of the airbag 30. Therefore, the passenger-seat airbag 30 expands in the area between the top end portion 14t of the knee bag and the occupant's lumbar part by extending around the top side of the top end portion 14t of the knee bag 14 which has finished expanding.

In this way, since the top end portion 14t is interposed between the bottom end portion 30b of the passenger-seat airbag 30 and the interior panel (instrument panel) 10, when the occupant's lumbar part or abdomen strikes the bottom portion of the airbag 30, retreating movement of the bottom portion of the airbag is restricted by the knee bag 14, so that, for example, the occupant's lumbar part is very adequately protected. Since it is not necessary to fully fill the gas in the area of the passenger-seat airbag 30 located near the top portion of the knee bag 14, the passenger-seat airbag 30 can accordingly be made smaller in capacity than a conventional airbag. Therefore, even if output of the inflator is made small, the airbag 30 expands adequately at an early stage in front of the occupant.

The inflator 18 for the knee bag may be started (for example, ignited) earlier than the inflator 34 for the airbag. When this is done, it is possible to complete the expansion of the knee bag 14 earlier.

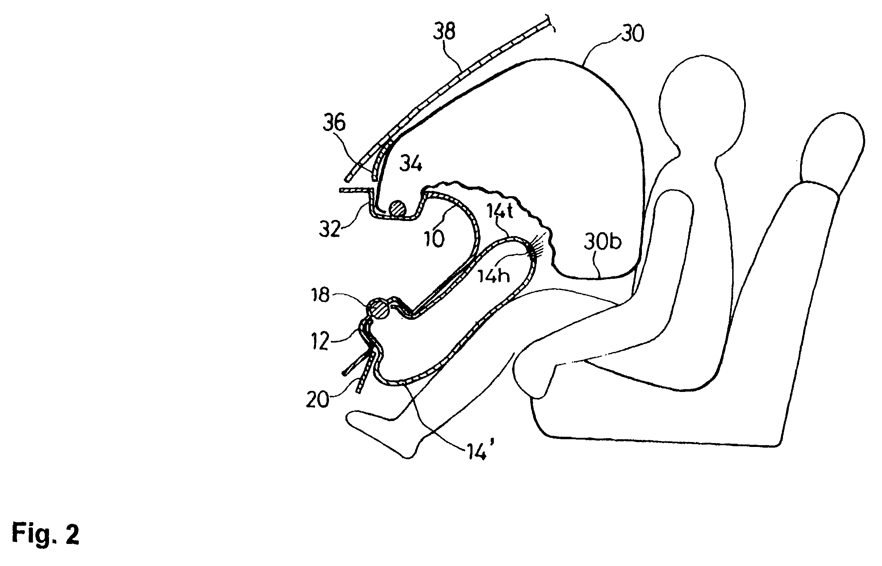

In the present invention, as shown in Fig. 2, a vent hole 14h may be provided in the surface of the top end portion of a knee bag 14' which comes into contact with an airbag 30 when expansions of both the knee bag 14' and the airbag 30 have been completed. In this case, when the legs of the occupant are driven into the expanded knee bag 14', at an initial stage (illustrated in Fig. 2) where the vent hole 14h is not covered by the airbag 30, gas inside the knee bag 14' smoothly flows out of the vent hole 14h, so that shock exerted on the occupant is absorbed. Thereafter, the vent hole 14h is covered by the passenger-seat airbag 30 that is being expanded, so that the state of the occupant protection device becomes the state shown in Fig. 1. As a result, the flowing out of the gas from the vent hole 14h is restricted, so that the internal pressure of the knee bag 14' is maintained at at least a predetermined value for a long period of time, thereby making it possible to very adequately protect the occupant's legs.

The other structural features shown in Fig. 2 are the same as those shown in Fig. 1, so that the same reference numerals represent corresponding parts.

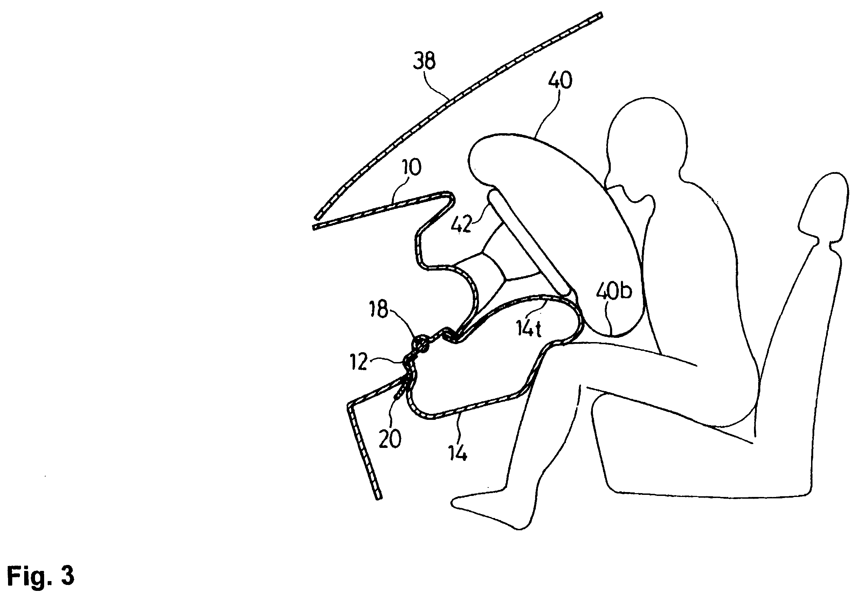

Fig. 3 is a vertical sectional view showing the vicinity of a driver's seat of an automobile including an occupant protection device for protecting an occupant by a driver-seat airbag 40 and a knee bag 14.

The driver-seat airbag 40 is mounted to a retainer (not shown) installed near the center of a steering wheel 42. The airbag is covered by a module cover (not shown) in a folded state. When, at the time of a collision of a vehicle, an inflator (not shown) operates to cause the airbag 40 to start expanding, the module cover is split, causing the airbag 40 to expand in front of the occupant.

The structural features of a knee bag device including the knee bag 14 are the same as those shown in Figs. 1 and 2, and the same reference numerals represent corresponding parts. When the inflator 18 operates, the knee bag 14 expands along an interior panel 10, and towards the vicinity of the bottom side of the steering wheel 42. When there is no occupant, a top end portion 14t of the knee bag 14 that has finished expanding is positioned above a bottom end portion 40b of the airbag 40 that has finished expanding by an amount of the order of at least 50 mm; desirably, 50 to 150 mm; and, most desirably, 60 to 100 mm.

In this embodiment, since a portion of the knee bag 14 near the top end thereof supports a portion of the back of the airbag 40 near the bottom end portion thereof from the front side of the vehicle, when the occupant is driven into the bottom portion of the airbag 40, retreating movement of the bottom portion of the airbag 40 is restricted. Even in the embodiment shown in Fig. 3, a knee bag, like the knee bag 14', including a vent hole in the surface of the top portion of the knee bag that comes into contact with the airbag 40 during expansion thereof may be used.

The above-described occupant protection devices are only embodiments of the present invention, so that the present invention is not limited thereto. For example, the knee bag and the passenger-seat airbag may be disposed at locations other than those illustrated in the figures. The present invention may be applied to a combination of a knee bag and a rear-seat airbag.

### [Advantages]

As can be understood from the aforementioned description, according to the present invention, it is possible to adequately protect an occupant by combining, for example, a passenger-seat airbag which expands in front of the upper half of the body of an occupant, a driver-seat airbag, or a back-seat airbag and a knee airbag which expands in front of the occupant's legs. According to the present invention, it is possible to adequately restrict forward movement of the occupant's lumbar part. Further, according to the present invention, it is possible to construct the occupant protection device so that an airbag expands at an early stage in front of the occupant even if an output of an inflator is small.

## Claims

1. An occupant protection device including an airbag (30, 40) which expands in front of the upper half of the body of a seated occupant and a knee bag (14, 14') which expands in front of the occupant's legs,
**characterized in that** a top end portion (14t) of the knee bag (14, 14') that has expanded is positioned at least 50 mm above a bottom end portion of the airbag (30, 40) that has expanded such that the airbag (30, 40) is expanded in an area between the top end portion (14t) of the knee bag (14, 14') and a lumbar region of said occupant by extending around the top side of the top and portion (14t) of the knee bag (14) which has finished expanding, said top end portion (14t) of the knee bag (14, 14') being interposed between the bottom end portion of the airbag (30, 40) and a panel (10) of a vehicle in which the occupant protection device is to be mounted, and **in that** the airbag (30, 40) and the knee bag (14, 14') are formed separately without communication between the airbag (30, 40) and the knee bag (14, 14').

2. An occupant protection device according to Claim 1, wherein said bottom end portion (30b, 40b) of the expanded airbag (30, 40) is positioned closer to the occupant than said top end portion (14t) of the expanded knee bag (14, 14').

3. An occupant protection device according to either Claim 1 or Claim 2, wherein the expansion of the knee bag (14, 14') is completed earlier than the expansion of the airbag (30, 40).

4. An occupant protection device according to any one of Claims 1 to 3, wherein the knee bag (14') includes a vent hole (14h) formed in a surface of the knee bag (14') that comes into contact with the expanded airbag (30).

5. An occupant protection device according to any one of claims 1 to 4,
further comprising a first inflator (34) for inflating the airbag (30, 40) and a second inflator (18) formed separately from the first inflator (34) for inflating the knee bag (14, 14').

6. An occupant protection device according to claim 5, further comprising a knee bag case (12) for accommodating the second inflator (18) and the knee bag (14, 14') in a folded state.

## Patentansprüche

1. Insassenschutzeinrichtung beinhaltend einen Airbag (30, 40), welcher sich vor der oberen Hälfte des Körpers eines sitzenden Insassen ausbreitet, und einen Kniesack (14, 14'), welcher sich vor den Insassenbeinen ausbreitet,
**dadurch gekennzeichnet,**
**dass** ein oberer Endabschnitt (14t) des ausgebreiteten Kniesacks (14, 14') mindestens 50 mm oberhalb eines unteren Endabschnitts des ausgebreiteten Airbags (30, 40) angeordnet ist, so dass sich der Airbag (30, 40) in einem Bereich zwischen dem oberen Endabschnitt (14t) des Kniesacks (14, 14') und einem Lendenbereich des Insassen um die Oberseite des oberen Endabschnitts (14t) des fertig ausgebreiteten Kniesacks (14) verlaufend ausbreitet, wobei der obere Endabschnitt (14t) des Kniesacks (14, 14') zwischen dem unteren Endabschnitt des Airbags (30, 40) und ein Paneel (10) eines Fahrzeugs angeordnet ist, in welchem die Insassenschutzeinrichtung anzubringen ist, und
**dass** der Airbag (30, 40) und der Kniesack (14, 14') getrennt ohne Verbindung zwischen dem Airbag (30, 40) und dem Kniesack (14, 14') ausgestaltet sind.

2. Insassenschutzeinrichtung nach Anspruch 1,
wobei der untere Endabschnitt (30b, 40b) des ausgebreiteten Airbags (30, 40) näher bei dem Insassen angeordnet ist als der obere Endabschnitt (14t) des ausgebreiteten Kniesacks (14, 14').

3. Insassenschutzeinrichtung entweder nach Anspruch 1 oder nach Anspruch 2,
wobei die Ausbreitung des Kniesacks (14, 14') eher als die Ausbreitung des Airbags (30, 40) abgeschlossen ist.

4. Insassenschutzeinrichtung nach einem der Ansprüche 1 bis 3,
wobei der Kniesack (14') ein in einer Oberfläche des Kniesacks (14'), welche mit dem ausgebreiteten Airbag (30) in Kontakt tritt, ausgebildetes Entlüftungsloch (14h) beinhaltet.

5. Insassenschutzeinrichtung nach einem der Ansprüche 1 bis 4,
weiterhin umfassend einen ersten Inflator (34) zum Aufblasen des Airbags (30, 40) und einen getrennt von dem ersten Inflator (34) ausgebildeten zweiten Inflator (18) zum Aufblasen des Kniesacks (14, 14').

6. Insassenschutzeinrichtung nach Anspruch 5,
weiterhin umfassend ein Kniesackgehäuse (12) zur Aufnahme des zweiten Inflators (18) und des Kniesacks (14, 14') in einem zusammengefalteten Zustand.

## Revendications

1. Un dispositif de protection d'occupant, comprenant un coussin gonflable de sécurité (30, 40) se gonflant à l'avant de la moitié supérieure du corps d'un occupant assis et un coussin pour les genoux (14, 14') se gonflant à l'avant des jambes de l'occupant,
**caractérisé en ce qu'**une partie d'extrémité supérieure (14t) du coussin gonflable pour les coussins pour les genoux (14, 14'), qui s'est gonflé, est positionnée au moins 50 mm au-dessus d'une partie d'extrémité inférieure du coussin gonflable de sécurité (30, 40) qui s'est gonflé, de manière que le coussin gonflable de sécurité (30, 40) soit gonflé dans une zone située entre la partie d'extrémité supérieure (14t) du coussin pour les genoux (14, 14') et une région lombaire dudit occupant, par extension autour de la face supérieure de la partie d'extrémité supérieure (14t) du coussin pour les genoux (14) qui a achevé de se gonfler, ladite partie d'extrémité supérieure (14t) du coussin pour les genoux (14, 14') étant interposée entre la partie d'extrémité inférieure du coussin gonflable de sécurité (30, 40) et un panneau (10) d'un véhicule dans lequel le dispositif de protection d'occupant doit être monté, et **en ce que** le coussin gonflable de sécurité (30, 40) et le coussin pour les genoux (14, 14') sont formés séparément sans communication entre le coussin gonflable de sécurité (30, 40) et le coussin pour les genoux (14, 14').

2. Un dispositif de protection d'occupant selon la revendication 1, dans lequel ladite partie d'extrémité inférieure (30b, 40b), du coussin gonflable de sécurité (30, 40) gonflé, est placée plus près de l'occupant que ladite partie d'extrémité supérieure (14t) du coussin pour les genoux (14, 14') gonflé.

3. Un dispositif de protection d'occupant selon la revendication 1 ou la revendication 2, dans lequel le gonflage du coussin pour les genoux (14, 14') est achevé avant le gonflage du coussin gonflable de sécurité (30, 40).

4. Un dispositif de protection d'occupant selon l'une quelconque des revendications 1 à 3, dans lequel le coussin pour les genoux (14, 14') comprend un trou d'évent (14h) formé dans une surface du coussin pour les genoux (14') venant en contact avec le coussin gonflable de sécurité (30) gonflé.

5. Un dispositif de protection d'occupant selon l'une quelconque des revendications 1 à 4, comprenant en outre un premier gonfleur (34) pour gonfler le coussin gonflable de sécurité (30, 40) et un deuxième gonfleur (18) formé séparément du premier gonfleur (34), pour gonfler le coussin pour les genoux (14, 14').

6. Un dispositif de protection d'occupant selon la revendication 5, comprenant en outre un boîtier (12) de coussin pour les genoux pour loger le deuxième gonfleur (18) et le coussin pour les genoux (14, 14') en un état plié.
